# EUROPEAN PATENT APPLICATION

(11) **EP 3 982 258 A1**
(43) Date of publication of application: **13.04.2022**
(21) Application number: 20818547.0
(22) Date of filing: 03.04.2020
(51) Int. Cl.: G06F 9/445

(54) **METHOD AND APPARATUS FOR REDUCING POWER CONSUMPTION OF VIRTUAL MACHINE CLUSTER**

(30) Priority: 05.06.2019 CN 201910488084
(71) Applicant: ZTE Corporation, Shenzhen, Guangdong 518057 (CN)
(72) Inventor: TONG, Yao, Shenzhen, Guangdong 518057 (CN); SHEN, Guang, Shenzhen, Guangdong 518057 (CN); ZHAO, Pei, Shenzhen, Guangdong 518057 (CN); QI, Chen, Shenzhen, Guangdong 518057 (CN); YU, Yifang, Shenzhen, Guangdong 518057 (CN); LV, Da, Shenzhen, Guangdong 518057 (CN)
(74) Representative: Petraz, Gilberto Luigi
(86) International application number: PCT/CN2020/083264
(87) International publication number: WO 2020/244300

(57) **Abstract**

Embodiments of the present application disclose a method and apparatus for reducing power consumption of a virtual machine cluster. The method includes: determining a number of remaining resources of each host machine in the virtual machine cluster and a resource pool to which each host machine in the virtual machine cluster belongs; migrating the virtual machines on the highest-ranked host machine all virtual machines on a host machine with a largest number of the remaining resources to a host machine with a smallest number of remaining resources; and hibernating or powering off host machines hosting no virtual machine.

## Description

The present application is filed on the basis of Chinese patent application No. 201910488084.0, filed on June 5, 2019, and claims the priority of the Chinese patent application, the entirety of which is incorporated herein by reference.

### Field of the Invention

Embodiments of the present application relate to, but are not limited to, the field of virtual machine resource scheduling, and more specifically, relate to a method and an apparatus for reducing power consumption of a virtual machine cluster.

### Background of the Invention

A cloud computing platform is a complex large-scale system, and virtual machines are an important part of the cloud computing platform, and have the characteristics of cross-system, resource isolation, migration, etc. Efficient deployment and dynamic migration operation of a virtual machine cluster can integrate scattered virtual machines to meet large-scale application requirements and improve the operation maintenance and quality of service of the cloud computing platform. A virtual machine cluster is an important part of the cloud computing platform.

The run cost of the cloud platform includes many aspects, such as fixed asset investment, circuit expense, power consumption, human cost, etc., and energy consumption is often several times the cost of its device investment in the running life cycle of the platform and becomes the main use cost. In the face of the problem of high power consumption of the cloud platform during use, at present, a large number of cloud platform research concerns focus on energy-saving and consumption-reducing methods based on physical servers of host machines. For example, some methods simply migrate the virtual machines on the host machines to a limited number of host machines as much as possible and then hibernate or power off idle host machines, without considering the requirements of applied service-level agreement (SLA), which cannot meet the requirements of actual commercial environments; some methods put forward the exchange of performance models of the physical servers when necessary, but it assumes that each physical server only corresponds to a single application, which cannot meet current actual application requirements; and some methods put forward dynamic regulation of voltages of the host machines and CPU frequency to save energy, but they are not suitable for inactive nodes.

Therefore, there is no solution in the prior art that effectively manages and balances user needs and performance to reduce the power consumption of the virtual machine cluster.

### Summary of the Invention

In view of this, an embodiment of the present application provides a method for reducing power consumption of a virtual machine cluster, including: determining a number of remaining resources of each host machine in the virtual machine cluster and a resource pool to which each host machine in the virtual machine cluster belongs; migrating in each resource pool all virtual machines on a host machine with a largest number of the remaining resources to a host machine with a smallest number of the remaining resources; and hibernating or powering off host machines hosting no virtual machine.

An embodiment of the present application further provides an apparatus for reducing power consumption of a virtual machine cluster, including: a determination unit, configured to determine the number of remaining resources of each host machine in the virtual machine cluster and a resource pool to which each host machine in the virtual machine cluster belongs; a migration unit, configured to migrate in each resource pool all virtual machines on the host machine with the largest number of the remaining resources to the host machine with the smallest number of the remaining resources; and a management unit, configured to hibernate or power off the host machines hosting no virtual machine.

An embodiment of the present application further provides an apparatus for reducing power consumption of a virtual machine cluster, including a storage, a processor and a computer program stored in the storage and capable of running on the processor, which, when executed by the processor, implements the above method for reducing the power consumption of the virtual machine cluster.

An embodiment of the present application further provides a computer readable storage medium, wherein the computer readable storage medium stores an information processing program which, when executed by a processor, implements steps of the method for reducing the power consumption of the virtual machine cluster.

Other features and advantages of the present application will be set forth in the following description and will partly become evident in the description or be understood by implementing the present application. The objective and other advantages of the present application may be achieved and obtained through structures specifically pointed out in the description, claims, and accompanying drawings.

### Brief Description of the Drawings

The accompanying drawings are used for providing further understanding of the technical solution of the present application and constitute a part of the specification to illustrate the technical solution of the present application together with embodiments of the present application, which do not constitute a limitation on the technical solution of the present application.
Fig. 1 is a flow chart of a method for reducing power consumption of a virtual machine cluster provided by an embodiment of the present application;
Fig. 2 is a flow chart of a method for reducing power consumption of a virtual machine cluster provided by another embodiment of the present application;
Fig. 3 is a structural diagram of an apparatus for reducing power consumption of a virtual machine cluster provided by an embodiment of the present application; and
Fig. 4 is a structural diagram of a system for reducing power consumption of a virtual machine cluster provided by an embodiment of the present application.

### Detailed Description of the Embodiments

In order to make the objective, technical solutions and advantages of the present application clearer, embodiments of the present application will be illustrated in detail hereinafter in combination with the accompanying drawings. It should be noted that the embodiments in the present application and the features in the embodiments can be arbitrarily combined with one another as long as there is no conflict.

The steps shown in the flow charts of the accompanying drawings can be performed in, such as, a computer system with a group of computer executable instructions. And, although logic orders are shown in the flow charts, in some cases, the steps shown or described can be performed in an order unlike here.

The technical solutions provided by the embodiments of the present application can effectively manage and balance user needs and performance. They are illustrated in detail below by several embodiments.

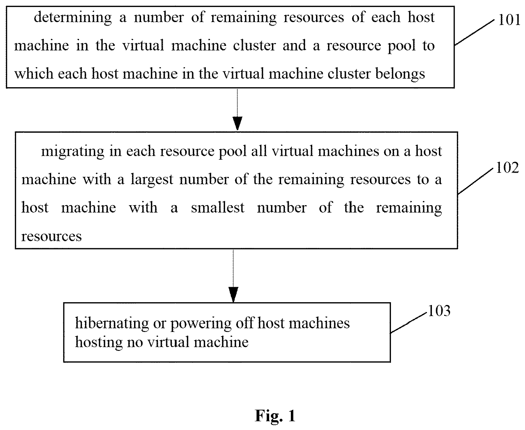

Fig. 1 is a flow chart of a method for reducing power consumption of a virtual machine cluster provided by an embodiment of the present application. As shown in Fig. 1, the method includes:
step 101, determining a number of remaining resources of each host machine in the virtual machine cluster and a resource pool to which each host machine in the virtual machine cluster belongs;
step 102, migrating in each resource pool all virtual machines on a host machine with a largest number of the remaining resources to a host machine with a smallest number of the remaining resources; and
step 103, hibernating or powering off host machines hosting no virtual machine.

Determining the number of the remaining resources of each host machine in the virtual machine cluster includes:
calculating a total number of computing resources of each host machine;
calculating, taking tasks as a consideration, a number of the computing resources required by each host machine to perform the tasks; and
subtracting the number of the computing resources required by each host machine to perform the tasks from the total number of the computing resources of each host machine to obtain the number of the remaining resources of each host machine.

The number of the computing resources required by each host machine to perform the tasks is a number of the computing resources required according to SLA, or a number of the computing resources obtained by the number of the computing resources required according to the SLA multiplied by a preset coefficient.

Determining the resource pool to which each host machine in the virtual machine cluster belongs includes:
placing host machines with same performance in a same resource pool.

The performance includes at least one of the following:
communication capability and computing capacity.

The method further includes:
marking tasks with priorities, the priorities include three levels of high, medium and low; and
reducing, after migration, peak power of host machines on which the virtual machines undertaking the low-priority tasks are located.
migrating in each resource pool all the virtual machines on the host machine with the largest number of the remaining resources to the host machine with the smallest number of the remaining resources includes:
   sorting all host machines in each resource pool according to numbers of the remaining resources from large to small; and
   migrating virtual machines on a highest-ranked host machine to a lowest-ranked host machine, but migrating, if a preset resource threshold is exceeded after migration, the virtual machines on the highest-ranked host machine to the last but one lowest-ranked host machine, and so on until all the virtual machines on the highest-ranked host machine are migrated.

The preset resource threshold is a resource utilization rate threshold set by a system for the host machines.

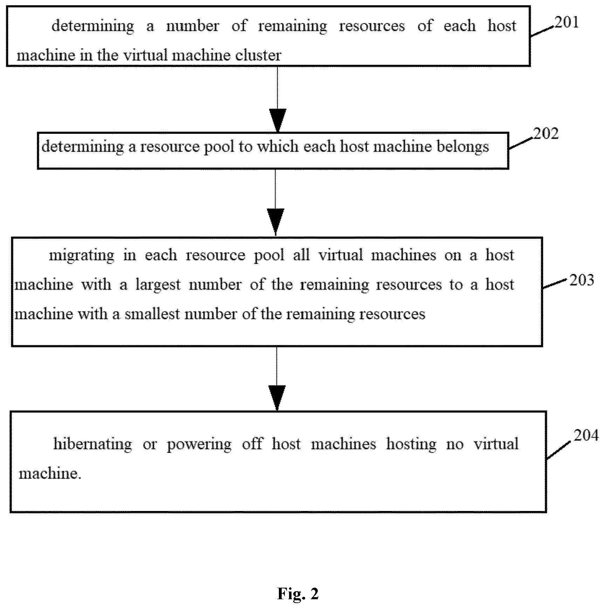

Fig. 2 is a flow chart of a method for reducing power consumption of a virtual machine cluster provided by another embodiment of the present application. As shown in Fig. 2, the method includes:
Step 201, determining the number of remaining resources of each host machine in the virtual machine cluster.

Specifically, the number of remaining resources of the host machines can be determined through the following estimation method. The estimation method includes:
1. calculating the total number of computing resources of each host machine;

The computing resources include the number of CPU cores, internal storage capacity, etc.
2. calculating, taking tasks as a consideration, the number of the computing resources required by each host machine to perform the tasks;

The number of the computing resources required by each host machine to perform the tasks is the number of the computing resources required according to the SLA, or the number of the computing resources obtained by the number of the computing resources required according to the SLA multiplied by a preset coefficient.

For important tasks, for example, the number of the computing resources required according to the SLA can be multiplied by a preset coefficient to ensure that the important tasks have enough resources to run normally. For example, the preset coefficient may be 1.2.

In a cloud computing environment, the resources may be flexibly scaled. Applied virtual machines can be dynamically increased or reduced based on the magnitude of loading capacity. Therefore, calculating applied resource occupancy by taking the tasks as the dimension can truly reflect the usage rate of the resources.
3. subtracting the number of the computing resources required by each host machine to perform the tasks from the total number of the computing resources of each host machine to obtain the number of the remaining resources of each host machine.

Step 202, determining the resource pool to which each host machine belongs.

The solution thought of this embodiment is to maximize the number of idle physical host machines after migration by properly placing the virtual machines, and then to shut down the idle physical host machines to realize the highest energy efficiency without affecting user requirements. Therefore, factors to consider for placement of the virtual machines are as follows:
1. communication overhead between node servers

When scheduling is carried out based on the power consumption of the tasks, the amount of communication between the tasks is predicted according to historical monitoring data. Considering that used nodes may be utilized again on some compute nodes, different nodes may have different communication capabilities, some are 10-gigabit network cards, some are gigabit network cards, and the virtual machines are placed on the host machines with the same communication capability as far as possible. For example, the host machines with the same communication capability can be placed in a same resource pool, and the host machines in the same resource pool is preferably selected for the placement of virtual machines.
2. considering node heterogeneity

When distributing tasks, a management program may use a group of heterogeneous nodes to process the tasks together. Since a node with superior performance may wait for a low-speed node due to differences of processing capabilities, the virtual machines are placed on the host machines with the same performance as far as possible. For example, the host machines with the same computing capability can be placed in the same resource pool, and the host machines in the same resource pool is preferably selected for the placement of virtual machines.

There is no fixed sequential order for the step 201 and the step 202 above.

Step 203, migrating in each resource pool all virtual machines on the host machine with the largest number of the remaining resources to the host machine with the smallest number of the remaining resources.
migrating in each resource pool all the virtual machines on the host machine with the largest number of the remaining resources to the host machine with the smallest number of the remaining resources includes:
sorting all the host machines in each resource pool according to the numbers of the remaining resources from large to small; and
migrating the virtual machines on the highest-ranked host machine to the lowest-ranked host machine, but migrating, if a preset resource threshold is exceeded after migration, the virtual machines on the highest-ranked host machine to the last but one lowest-ranked host machine, and so on until all the virtual machines on the highest-ranked host machine are migrated.

Specifically, under a premise that the preset resource threshold set by a system is not exceeded, all the virtual machines on the host machine with the largest number of the remaining computing resources are migrated to the host machine with the smallest number of the actual remaining computing resources based on the above factors for placement of the virtual machines. If the preset resource threshold set by the system is exceeded after migration, all the virtual machines on the host machine with the largest number of the remaining computing resources are migrated to the host machine with the last but one smallest number of the actual remaining computing resources.

The preset resource threshold is a resource utilization rate threshold set by the system for the host machines. For example, the preset resource threshold may be 80%. That is, if the resource utilization rate of the destination host exceeds 80% after migration, it means that the preset resource threshold set by the system is exceeded, thus the migration cannot be carried out.

Step 204, hibernating or powering off the host machines hosting no virtual machine.

In this way, the power consumption of the entire virtual machine cluster is reduced.

In another embodiment of the present application, the step 201 to the step 204 above can be repeated until the migration of the entire data center exceeds the preset resource threshold set by the system. In this way, all the host machines hosting no virtual machine can be hibernated or powered off to the maximum extent, thereby reducing the power consumption of the entire data center.

In another embodiment of the present application, the factor of time limits can also be considered at the time of placing the virtual machines. For example, after migrating the virtual machines, peak power of the host machines on which the virtual machines undertaking the low-priority tasks are located is reduced.

The tasks can be marked with priorities, the priorities include three levels of high, medium and low. Power of the host machines on which the virtual machines undertaking the low-priority tasks are located can be reduced.

Specifically, there is no need for the servers to process the low-priority tasks at a limit speed, and the processing speed of the servers can be reduced by adjusting the peak power of the node servers. The need can be met as long as the tasks can be completed before the time limits are up, thus reducing the power consumption.

The technical solutions provided by the above embodiments of the present application meet the need of providing and managing the virtual machine by estimating the smallest power consumption required by a user. Meanwhile, the number of the active virtual machines is minimized through a dynamic virtual machine placement technology, thereby shutting down the inactive virtual machines. As a result, the power consumption of the virtual machine cluster is reduced on the premise of meeting the need of the user, thereby reducing the use cost of a cloud platform.

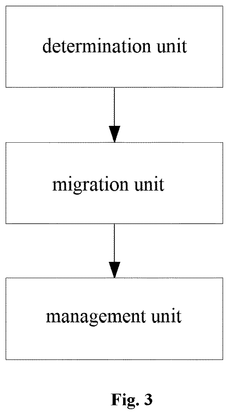

Fig. 3 is a structural diagram of an apparatus for reducing power consumption of a virtual machine cluster provided by an embodiment of the present application. As shown in Fig. 3, the apparatus includes:
a determination unit, configured to determine the number of remaining resources of each host machine in the virtual machine cluster and a resource pool to which each host machine in the virtual machine cluster belongs;
a migration unit, configured to migrate in each resource pool all virtual machines on the host machine with the largest number of the remaining resources to the host machine with the smallest number of the remaining resources; and
a management unit, configured to hibernate or power off the host machines hosting no virtual machine.

The determination unit is specifically configured to calculate the total number of computing resources of each host machine;
to calculate, taking tasks as a consideration, the number of the computing resources required by each host machine to perform the tasks; and
to subtract the number of the computing resources required by each host machine to perform the tasks from the total number of the computing resources of each host machine to obtain the number of the remaining resources of each host machine.

The number of the computing resources required by each host machine to perform the tasks is the number of the computing resources required according to the SLA, or the number of the computing resources obtained by the number of the computing resources required according to the SLA multiplied by a preset coefficient.

The determination unit is specifically configured to
place the host machines with same performance in a same resource pool.

The performance includes at least one of the following:
communication capability and computing capacity.

The apparatus further includes:
a task marking unit, configured to mark the tasks with priorities, and the priorities include three levels of high, medium and low.

The management unit is further configured to reduce, after the migration, peak power of the host machines on which the virtual machines undertaking the low-priority tasks are located.

The migration unit is specifically configured to sort all the host machines in each resource pool according to the numbers of the remaining resources from large to small; and
to migrate the virtual machines on the highest-ranked host machine to the lowest-ranked host machine, but migrate, if a preset resource threshold is exceeded after migration, the virtual machines on the highest-ranked host machine to the last but one lowest-ranked host machine, and so on until all the virtual machines on the highest-ranked host machine are migrated.

The preset resource threshold is a resource utilization rate threshold set by a system for the host machines.

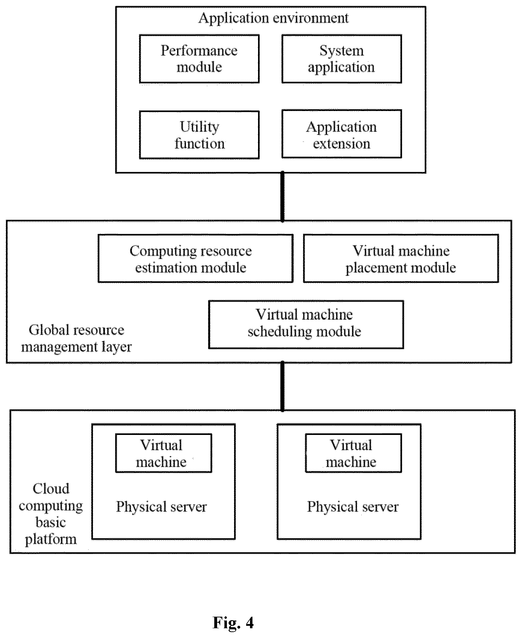

Fig. 4 is a structural diagram of a system for reducing power consumption of a virtual machine cluster provided by an embodiment of the present application. As shown in Fig. 4, the system includes:
an application environment, a global resource management layer and a cloud computing basic platform.

The application environment is a composite component including host machine applications in a cloud environment, and the global resource management layer interacts with the plurality of applications to serve the various applications. An application environment includes the following basic components:
1) a system application, which is a pluggable component for implementing special application functions.
2) a performance module, which is a pluggable performance component module and is configured to implement mapping from resources to working sets as well as Quality of Service (QoS).
3) an application extension, which is an application scaling control component that controls, extends and manages the actual application scale and can notify new virtual machines (VM) to be assigned or reclaimed when an application changes.
4) a utility function, which is an application-based utility function module that proposes fixed standards for some requirements of the quality of service, such as average response time, which is the most common.

The global resource management layer is configured to implement the technical solutions provided by the above embodiments. The global resource management layer includes:
a computing resource estimation module, capable of realizing parts of the functions executed by the above determination unit. Specifically, the computing resource estimation module decides the choice of the source host machine for migration, which requires each of the host machines to send back an application-related specific parameter (also known as a preset coefficient, which is configured to calculate an actual occupancy value of the resources) according to a given application condition, and to transmit the application-related specific parameter to a virtual machine placement module;
the virtual machine placement module, capable of realizing parts of the functions executed by the above determination unit and functions executed by the task marking unit; specifically, the virtual machine placement management module considers virtual machine placement based on a given condition in combination with communication overhead, heterogeneity and time limits between the node servers; the host machines with the same communication capability are placed into the same resource pool, the host machines with the same computing capacity are placed into the same resource pool, and the host machines in the same resource pool are preferably selected for the placement of virtual machines, and in the meantime, the tasks are marked with priorities which include three levels of high, medium and low, and power of the host machines on which the virtual machines undertaking the low-priority tasks are located can be reduced;
a virtual machine scheduling module, capable of realizing functions executed by the above migrating unit and management unit; specifically, the virtual machine scheduling module is responsible for specific virtual machine placement operation, and the migration of the virtual machines is carried out according to processing results of the computing resource estimation module and the virtual machine placement management module; and all the host machines hosting no virtual machine are hibernated or powered off, thereby reducing the power consumption of the entire data center.

The cloud computing basic platform includes physical servers, namely the host machines. Each of the host machines can bear virtual machines.

An embodiment of the present application further provides an apparatus for reducing power consumption of a virtual machine cluster. The apparatus includes a storage, a processor and a computer program stored in the storage and capable of running on the processor, which, when executed by the processor, implements the method for reducing the power consumption of the virtual machine cluster according to any one of the methods for reducing the power consumption of the virtual machine cluster.

An embodiment of the present application further provides a computer readable storage medium. The computer readable storage medium stores an information processing program which, when executed by a processor, implements steps of any one of the methods for reducing the power consumption of the virtual machine cluster.

A person of ordinary skill in the art may understand that, all or some steps of the methods disclosed above and functional modules/units of a system or a device may be implemented as software, firmware, hardware, and a proper combination thereof. In an implementation of the hardware, a division of the functional modules/units mentioned above does not necessarily correspond to a division of physical components. For example, one physical component may have multiple functions, or one function or step may be implemented by multiple physical components cooperatively. Some components or all components may be implemented as software executed by a processor, such as a digital signal processor or a microprocessor, or may be implemented as hardware, or may be implemented as an integrated circuit, such as an application-specific integrated circuit. Such software may be distributed on a computer readable medium, and the computer readable medium may include a computer storage medium (or non-transient medium) and a communications medium (or transient medium). As is known to a person of ordinary skill in the art, the term of computer storage medium includes volatile and non-volatile, removable and non-removable mediums that may be implemented in an method or technology for storing information (such as a computer readable instruction, a data structure, and a program module or other data). The computer storage medium includes, but is not limited to, an RAM, an ROM, an EEPROM, a flash memory or other memory technology, a CD-ROM, a digital video disk (DVD) or other optical disk storage, a magnetic cassette, a magnetic tape, a magnetic disk storage or other magnetic storage device, or any other medium which can be used to store the desired information and which can be accessed by a computer. In addition, as is known to a person of ordinary skill in the art, the communications medium usually includes the computer readable instruction, the data structure, and the program module or other data in a modulated data signal, such as a carrier or other transmission mechanisms, and can include any information delivery medium.

## Claims

1. A method for reducing power consumption of a virtual machine cluster, comprising:
determining a number of remaining resources of each host machine in the virtual machine cluster and a resource pool to which each host machine in the virtual machine cluster belongs;
migrating in each resource pool all virtual machines on a host machine with a largest number of the remaining resources to a host machine with a smallest number of the remaining resources; and
hibernating or powering off host machines hosting no virtual machine.

2. The method according to claim 1, wherein determining the number of the remaining resources of each host machine in the virtual machine cluster comprises:
calculating a total number of computing resources of each host machine;
calculating, taking tasks as a consideration, a number of the computing resources required by each host machine to perform the tasks; and
subtracting the number of the computing resources required by each host machine to perform the tasks from the total number of the computing resources of each host machine to obtain the number of the remaining resources of each host machine.

3. The method according to claim 2,
wherein the number of the computing resources required by each host machine to perform the tasks is a number of the computing resources required according to service-level agreement (SLA), or a number of the computing resources obtained by the number of the computing resources required according to the SLA multiplied by a preset coefficient.

4. The method according to claim 1, wherein determining the resource pool to which each host machine in the virtual machine cluster belongs comprises:
placing host machines with same performance in a same resource pool;
the performance comprises at least one of the following:
communication capability and computing capacity.

5. The method according to claim 1, wherein the method further comprises:
marking tasks with priorities, the priorities include three levels of high, medium and low; and
reducing, after migration, peak power of host machines on which virtual machines undertaking the low-priority tasks are located.

6. The method according to claim 3, wherein migrating in each resource pool all the virtual machines on the host machine with the largest number of the remaining resources to the host machine with the smallest number of the remaining resources comprises:
sorting all host machines in each resource pool according to numbers of the remaining resources from large to small; and
migrating virtual machines on a highest-ranked host machine to a lowest-ranked host machine, but migrating, if a preset resource threshold is exceeded after migration, the virtual machines on the highest-ranked host machine to the last but one lowest-ranked host machine, and so on until all the virtual machines on the highest-ranked host machine are migrated.

7. The method according to claim 6,
wherein the preset resource threshold is a resource utilization rate threshold set by a system for the host machines.

8. An apparatus for reducing power consumption of a virtual machine cluster, comprising:
a determination unit, configured to determine a number of remaining resources of each host machine in the virtual machine cluster and a resource pool to which each host machine in the virtual machine cluster belongs;
a migration unit, configured to migrate in each resource pool all virtual machines on a host machine with a largest number of the remaining resources to a host machine with a smallest number of the remaining resources; and
a management unit, configured to hibernate or power off host machines hosting no virtual machine.

9. An apparatus for reducing power consumption of a virtual machine cluster, comprising a storage, a processor and a computer program stored in the storage and capable of running on the processor, the computer program, when executed by the processor, implements the method for reducing the power consumption of the virtual machine cluster according to any one of claims 1 to 7.

10. A computer readable storage medium, wherein the computer readable storage medium stores an information processing program which, when executed by a processor, implements steps of the method for reducing the power consumption of the virtual machine cluster according to any one of claims 1 to 7.
